# EUROPEAN PATENT APPLICATION

(11) **EP 4 712 252 A1**
(43) Date of publication of application: **18.03.2026**
(21) Application number: 25179117.4
(22) Date of filing: 27.05.2025
(51) Int. Cl.: H01M 50/533, H01M 50/534, H01M 50/578, H01M 50/581, H01M 50/583, H01M 50/167, H01M 50/56, H01M 10/0587

(54) **ELECTRODE ASSEMBLY AND METHOD OF MANUFACTURING SECONDARY BATTERY INCLUDING THE ELECTRODE ASSEMBLY**

(30) Priority: 13.09.2024 KR 20240126160
(71) Applicant: SAMSUNG SDI CO., LTD., Yongin-si, Gyeonggi-do 17084 (KR)
(72) Inventor: KIM, Kyungtae, 17084 Yongin-Si, Gyeonggi-do (KR)
(74) Representative: Gulde & Partner

(57) **Abstract**

An electrode assembly according to the present disclosure includes a positive electrode plate, a negative electrode plate, a separator positioned between the positive electrode plate and the negative electrode plate, and an electrode tab electrically connected to the positive electrode plate. The electrode tab includes a first metal and a second metal that at least partially surrounds the first metal.

## Description

### BACKGROUND

### Field

Aspects of embodiments of the present disclosure relate to an electrode assembly and a method of manufacturing a secondary battery including the electrode assembly.

### Description of the Related Art

A secondary battery is a rechargeable battery, which means that the battery can be charged and discharged multiple times. Secondary batteries are widely used in various applications, including electronic devices (such as smartphones, laptops, and tablets), electric vehicles, solar power generation systems, and emergency power supply systems. In particular, lithium-ion batteries, which have a high energy density and excellent charge-discharge efficiency, are used in a variety of electronic devices and electric vehicles.

In the event of an external short circuit or similar occurrence, an internal pressure within the secondary battery cell may increase, which can cause a current interrupt device (CID) to be activated. However, as the current interrupt device may be triggered only when a temperature and/or pressure of the secondary battery cell significantly rises, relying solely on the current interrupt device may lead to damage to neighboring secondary battery cells in the battery pack. Accordingly, there is a need for additional devices, beyond the current interrupt device, to prevent damage to neighboring secondary battery cells.

The above information disclosed in this background section is for enhancement of understanding of the background of the present disclosure, and therefore it may contain information that does not constitute related (or prior) art.

### SUMMARY

To solve the problems described above, aspects of embodiments of the present disclosure provide an electrode assembly and a method of manufacturing a secondary battery including the electrode assembly.

These and other aspects and features of the present disclosure will be described in or will be apparent from the following description of embodiments of the present disclosure.

According to an embodiment of the present disclosure, an electrode assembly includes a positive electrode plate, a negative electrode plate, a separator positioned between the positive electrode plate and the negative electrode plate, and an electrode tab electrically connected to the positive electrode plate, wherein the electrode tab comprises a first metal and a second metal that may at least partially surround the first metal.

According to an embodiment of the present disclosure, a melting point of the second metal may be higher than a melting point of the first metal.

According to an embodiment of the present disclosure, the melting point of the first metal may range from 50 °C to 280 °C.

According to an embodiment of the present disclosure, the first metal may be an alloy including at least two of arsenic (As), lead (Pb), tin (Sn), cadmium (Cd), and indium (In), and the second metal may be a metal including aluminum (Al).

According to an embodiment of the present disclosure, the first metal may be located at a center of the electrode tab with all of its surfaces surrounded by the second metal.

According to an embodiment of the present disclosure, at least one surface of the first metal may be exposed to outside of the electrode tab.

According to an embodiment of the present disclosure, the electrode tab may include a first plate-shaped metal made of the first metal, a second plate-shaped metal made of the second metal and disposed on a first surface of the first plate-shaped metal, and a third plate-shaped metal made of the second metal and disposed on a second surface opposite to the first surface of the first plate-shaped metal, and wherein a pair of side surfaces of the first plate-shaped metal may be exposed to outside of the electrode tab.

According to an embodiment of the present disclosure, a thickness of the first metal may be 30% or less of a thickness of the electrode tab.

According to an embodiment of the present disclosure, a width of the first metal may be at least 75% of a width of the electrode tab.

According to an embodiment of the present disclosure, a method of manufacturing the electrode tab may include positioning a plate-shaped metal made of the first metal between two plate-shaped metals each of which may be made of the second metal, and performing a rolling process on the plate-shaped metal and the two plate-shaped metals.

According to an embodiment of the present disclosure, in the rolling process, a thickness of the second metal positioned on an upper surface of the first metal and a thickness of the second metal positioned on a lower surface of the first metal may be the same.

According to an embodiment of the present disclosure, the electrode tab is configured such that, when a temperature thereof rises to a temperature higher than a melting point of the first metal, the first metal melts and then the second metal is short-circuited.

According to an embodiment of the present disclosure, the melted first metal may be discharged to the outside of the electrode tab.

According to an embodiment of the present disclosure, a method for manufacturing a secondary battery includes disposing an electrode assembly within a case, electrically connecting an electrode tab of the electrode assembly and a cap assembly, and coupling the cap assembly to an end of the case, wherein the electrode tab comprises a first metal and a second metal that at least partially surrounds the first metal.

According to an embodiment of the present disclosure, the method may further include preparing a first plate-shaped metal made of the first metal, preparing two second plate-shaped metals each of which may be made of the second metal, positioning the first plate-shaped metal between the two second plate-shaped metals, and performing a rolling process on the first plate-shaped metal and the two second plate-shaped metals.

According to an embodiment of the present disclosure, a melting point of the second metal may be higher than a melting point of the first metal.

According to an embodiment of the present disclosure, the first metal may be an alloy including at least two of arsenic (As), lead (Pb), tin (Sn), cadmium (Cd), and indium (In), and the second metal may be a metal including aluminum (Al).

According to an embodiment of the present disclosure, the first metal may be located at a center of the electrode tab with all of its surfaces surrounded by the second metal.

According to an embodiment of the present disclosure, at least one surface of the first metal may be exposed to outside of the electrode tab.

According to an embodiment of the present disclosure, the performing of the rolling process may include controlling a thickness of the second metal positioned on an upper surface of the first metal and a thickness of the second metal positioned on a lower surface of the first metal to be the same.

According to some embodiments of the present disclosure, the secondary battery, which includes the electrode assembly, includes an electrode tab (e.g., a positive electrode tab) capable of short-circuiting such that damage to the battery pack can be minimized before the secondary battery cell experiences internal degradation and a rise in internal pressure.

However, aspects and features of the present disclosure are not limited to those described above, and other aspects and features not mentioned will be clearly understood by a person skilled in the art from the detailed description, described below.

### BRIEF DESCRIPTION OF DRAWINGS

The drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates a cylindrical secondary battery 100 according to some embodiments of the present disclosure.
FIG. 2 is a perspective view of the electrode tab 10 of the secondary battery according to a first embodiment of the present disclosure.
FIG. 3, parts (a) and (b), is an example of a method of manufacturing the electrode tab 10 of the secondary battery according to some embodiments of the present disclosure.
FIG. 4, parts (a)-(c), illustrates a short-circuiting process of the electrode tab 10 in the secondary battery according to some embodiments of the present disclosure.
FIG. 5 and FIG. 6 each illustrates the electrode tab 10 of the secondary battery according to a second embodiment of the present disclosure.
FIG. 7 illustrates the electrode tab 10 of the secondary battery according to a third embodiment of the present disclosure.
FIG. 8 illustrates a pouch-type secondary battery 800 according to some embodiments of the present disclosure.
FIG. 9 is a flowchart of a method S900 of manufacturing a secondary battery according to some embodiments of the present disclosure, which may describe a method of manufacturing the secondary battery 100 shown in FIG. 1.
FIG. 10 is a flowchart of a method S1000 of manufacturing an electrode tab according to some embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

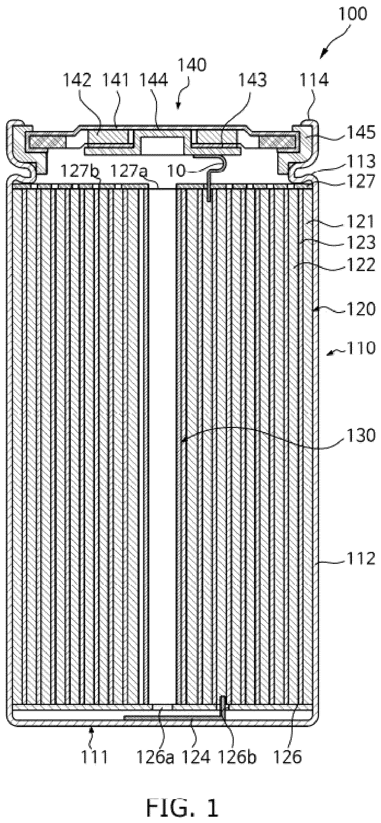

FIG. 1 illustrates a cylindrical secondary battery 100 according to some embodiments of the present disclosure.

Referring to FIG. 1, a cylindrical lithium-ion secondary battery 100 according to one or more embodiments of the present disclosure may include a cylindrical can 110, an electrode assembly 120, and a cap assembly 140. In addition, in some embodiments, the cylindrical lithium-ion secondary battery 100 may include a center pin 130. Further, in the secondary battery 100 according to one or more embodiments of the present disclosure, the cap assembly 140 may also perform a current interruption operation and, thus, may sometimes be referred to as a current interrupt device (CID).

The case 110 may have the shape of a cylindrical can. The cylindrical can 110 may have a substantially circular bottom part 111 and a cylindrical sidewall 112 upwardly extending (e.g., extending a predetermined length) from a circumference (or a periphery) of the bottom part 111. During the manufacturing process of the secondary battery 100, the top portion of the cylindrical can 110 is open. Therefore, during the assembly process of the secondary battery 100, the electrode assembly 120 and the center pin 130 may be inserted into the cylindrical can 110 together with an electrolyte. The cylindrical can 110 may be made of, for example, steel, stainless steel, aluminum, aluminum alloy, or an equivalent thereof but is not limited to.

The electrode assembly 120 may be accommodated inside the cylindrical can 110. The electrode assembly 120 may include a negative electrode plate 121 coated with a negative electrode active material (e.g., graphite, carbon, etc.) on a negative electrode current collector plate, a positive electrode plate 122 coated with a positive electrode active material (e.g., a transition metal oxide, such as LiCoO₂, LiNiO₂, LiMn₂O₄, etc.) on a positive electrode current collector plate, and a separator 123 positioned between the negative electrode plate 121 and the positive electrode plate 122 to prevent a short circuit therebetween while allowing the movement of lithium ions therethrough. In addition, the negative electrode plate 121, the positive electrode plate 122, and the separator 123 may be wound in a substantially cylindrical shape. In one embodiment, the negative electrode current collector may be made of copper (Cu) foil, the positive electrode current collector may be made of aluminum (Al) foil, and the separator may be made of polyethylene (PE) or polypropylene (PP), but the present disclosure is not limited thereto.

A positive electrode for a rechargeable lithium battery may include a current collector and a positive electrode active material layer on the current collector. The positive electrode active material layer may include a positive electrode active material and may further include a binder and/or a conductive material (e.g., an electrically conductive material).

For example, the positive electrode may further include an additive that can serve as a sacrificial positive electrode.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles to each other and also to attach the positive electrode active material to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Al may be used as the current collector, but the present disclosure is not limited thereto.

In addition, a negative electrode tab 124 protruding and extending a certain length (e.g., a suitable length) downwardly from the electrode assembly 120 may be welded to the negative electrode plate 121, and a positive electrode tab 10 protruding and extending a certain length (e.g., a suitable length) upwardly from the electrode assembly 120 may be welded to the positive electrode plate 122, but an opposite configuration is possible. In addition, for example, the negative electrode tab 124 may be made of copper (Cu) or nickel (Ni), and the positive electrode tab 10 may be made of aluminum (Al), but the present disclosure is not limited thereto.

In addition, the negative electrode tab 124 of the electrode assembly 120 may be welded to the bottom part 111 of the cylindrical can 110. Therefore, the cylindrical can 110 may act as a negative electrode. Of course, alternatively, the positive electrode tab 10 may be welded to the bottom part 111 of the cylindrical can 110, and in such an embodiment, the cylindrical can 110 may act as a positive electrode. Here, the positive electrode tab 10 and the negative electrode tab 124 may electrically connect the electrode assembly 120 with the cap assembly 140.

In addition, the cap assembly 140 may be coupled to one end of the case 110. For a non-limiting example, the secondary battery 100 may include a second insulation plate 127 coupled to the cylindrical can 110, having a first hole 127a in the center and a plurality of second holes 127b formed outside thereof (e.g. located peripherally to the center) and may be interposed between the electrode assembly 120 and the cap assembly 140. The second insulation plate 127 prevents the electrode assembly 120 from electrically contacting the cap assembly 140. By way of example, the second insulation plate 127 prevents the negative electrode plate 121 of the electrode assembly 120 from electrically contacting the cap assembly 140. The first hole 127a allows the gas to quickly move toward the cap assembly 140 if (or when) a large amount of gas is generated due to an abnormality of the secondary battery, and the second holes 127b allow the positive electrode tab 10 to penetrate (or extend) therethrough and be welded to the cap assembly 140. In addition, the remaining second holes 127b allow an electrolyte to quickly flow into the electrode assembly 120 in an electrolyte injection process.

In addition, the diameters of the first holes 126a and 127a of the first and second insulation plates 126 and 127 are formed to be smaller than the diameter of the center pin 130, thereby preventing the center pin 130 from electrically contacting the bottom part 111 of the cylindrical can 110 or the cap assembly 140 due to an external impact.

The center pin 130 has a shape of a hollow circular pipe and may be coupled to the center of the electrode assembly 120. The center pin 130 may be made of, for example, steel, stainless steel, aluminum, an aluminum alloy, or polybutylene terephthalate, but the present disclosure is not limited thereto. The center pin 130 suppresses (or prevents) deformation of the electrode assembly 120 during charging and discharging of the battery and acts as a passage for gas generated inside the secondary battery. Of course, in some embodiments, the center pin 130 may be omitted.

The cap assembly 140 may include a top plate 141, a middle plate 142, an insulation plate 143, and a bottom plate 144.

The middle plate 142 is located below the top plate 141 and may have a substantially flat shape.

When viewed from the bottom, the insulation plate 143 may be formed in a circular ring shape having a suitable width (e.g., a predetermined width). In addition, the insulation plate 143 insulates the middle plate 142 and the bottom plate 144 from each other. The insulation plate 143 may be interposed between, for example, the middle plate 142 and the bottom plate 144 to then be ultrasonically welded, but the present disclosure is not limited thereto.

In the event of an external short circuit or similar occurrence, an internal pressure within the secondary battery cell may increase. The increased pressure may cause the current interrupt device to be activated. For example, the external short circuit may cause a current flow within the secondary battery cell. As a result, side reactions and thermal runaway may occur in the secondary battery cell, which may lead to an increase in internal pressure. When the internal pressure of the secondary battery cell rises, the current interrupt device may be activated, thereby placing the secondary battery cell in an insulated state. Alternatively, in a case where an external short circuit occurs in a low-resistance region, the electrode tab may be cut, thereby placing the secondary battery cell in an insulated state.

When the current interrupt device is the only means for placing the secondary battery cell in an insulated state, it is possible that neighboring secondary battery cells may be damaged. For example, when an external short circuit occurs in a high-resistance region, the current interrupt device may not be activated until the internal pressure reaches and exceeds a predetermined threshold. In other words, the current interrupt device may only be activated by rapid degradation of the secondary battery cell or by the generation of significant amounts of gas. In such cases, the temperature of the secondary battery cell may increase, which may adversely affect neighboring secondary battery cells, leading to damage to the battery pack.

In some embodiments of the present disclosure, an electrode tab 10 is provided to prevent damage to neighboring secondary battery cells before the temperature of the secondary battery cell reaches a high temperature. In one embodiment, the electrode tab 10 may include an alloy layer with a low melting point, which may induce an insulated state of the electrode tab 10 before the activation of the current interrupt device. Accordingly, the battery pack can be made stable before the secondary battery cell rises to a high temperature.

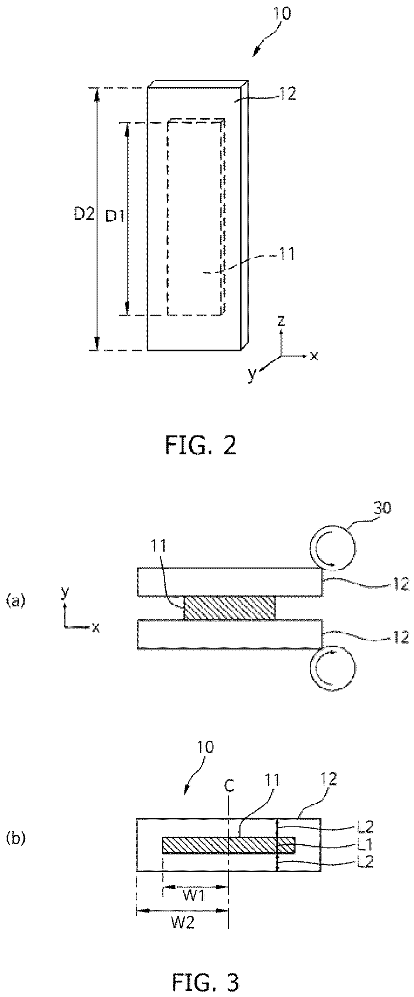

The electrode tab 10 will be described in detail with reference to FIGS. 2 to 10.

FIG. 2 is a perspective view of the electrode tab 10 of the secondary battery according to a first embodiment of the present disclosure.

Referring to FIG. 2, the electrode tab 10 according to some embodiments of the present disclosure may be electrically connected to the positive electrode plate 122 of the electrode assembly 120. In one embodiment, the electrode tab 10 may be the positive electrode tab. The positive electrode tab may be formed of a strip-shaped metal plate and manufactured by including a metal material having excellent conductivity, such as an aluminum (Al) plate. Accordingly, a first metal 11 and a second metal 12 may be plate-shaped. But the present disclosure is not limited to such a configuration.

In one embodiment, the electrode tab 10 may include the first metal 11 and the second metal 12 surrounding at least a portion of the first metal 11. For example, as illustrated in FIG. 2, a length D1 of the first metal 11 may be equal to or less than a length D2 of the second metal 12. Here, the length of the electrode tab 10 refers to a length extending in the Z-axis direction as shown in FIG. 2, which corresponds to a longitudinal direction of the electrode tab 10. That is, the Z-axis direction may be a direction in which the electrode tab 10 extends.

In an embodiment, the first metal 11 may be located at the center of the electrode tab 10 with all sides (surfaces) thereof surrounded by the second metal 12. In this embodiment, the length D1 of the first metal 11 may be less than the length D2 of the second metal 12. In addition, a width and thickness of the first metal 11 may be less than a width and thickness of the second metal 12.

In an embodiment, a melting point of the second metal 12 may be higher than a melting point of the first metal 11. For example, in a case where the second metal 12 is aluminum, the melting point of the second metal 12 may be 660 °C, and the melting point of the first metal 11 may range from 50 °C to 280 °C. F In embodiments, the first metal 11 may be an alloy including at least two of arsenic (As), lead (Pb), tin (Sn), cadmium (Cd), and indium (In). And the second metal 12 may be a metal including aluminum (Al). Accordingly, as a temperature of the secondary battery rises, the first metal 11 may melt before the second metal 12, and high heat may be generated locally due to the occurrence of high resistance in the second metal 12 where the current path becomes narrow. The high heat may cause a short circuit in the electrode tab 10. Thus, the secondary battery cell may reach an insulated state before the neighboring secondary battery cells are damaged.

FIG. 3 illustrates an example of a method for manufacturing the electrode tab 10 of the secondary battery according to some embodiments of the present disclosure.

Referring to (a) of FIG. 3, a plate-shaped metal made of the first metal 11 may be positioned between two plate-shaped metals each made of the second metal 12. Here, the electrode tab 10 may be formed by performing a rolling process using a rolling device 30. A rolling process refers to a process in which a metal material is fed between two rotating rollers for processing the metal. In the present disclosure, the rolling process is described as an example, but the method for manufacturing the electrode tab 10 is not limited to the rolling process.

Referring to (b) of FIG. 3, the rolling process may be controlled such that a thickness L2 of the second metal 12 positioned on an upper surface of the first metal 11 and a thickness L2 of the second metal 12 positioned on a lower surface of the first metal 11 are the same. Here, the thicknesses L1 and L2 of the first metal 11 and the second metal 12 may be the lengths extending in the y-axis direction on the x-y cross section of the electrode tab 10, as depicted in FIG. 3(b). As a result, the first metal 11 may be surrounded by the second metal 12 and located at the center of the electrode tab 10.

In an embodiment, the thickness L1 of the first metal 11 may be 30% or less of the total thickness of the electrode tab 10. In an embodiment, the thickness L1 of the first metal 11 and the thickness L2 of the second metal 12 positioned on the upper surface or the lower surface of the first metal 11 may be in a 3:4 ratio. In another embodiment, the thickness L1 of the first metal 11 and the thickness L2 of the second metal 12 positioned on the upper surface or the lower surface of the first metal 11 may be in a 2:5 ratio. The first metal 11 may be made to have the thickness L1 that is sufficient to cause a short circuit in the electrode tab 10 when the first metal 11 melts due to degradation in the secondary battery.

In an embodiment, a width W1 of the first metal 11 may be at least 75% of a width W2 of the electrode tab 10 relative to the center C of the electrode tab 10. Here, as depicted in FIG. 3(b), the widths W1 and W2 of the first metal 11 and the second metal 12 may be the lengths extending in the x-axis direction on the x-y cross-section of the electrode tab 10. The first metal 11 may be made to have the width W1 that is sufficient to cause a short circuit in the electrode tab 10 when the first metal 11 melts due to degradation in the secondary battery.

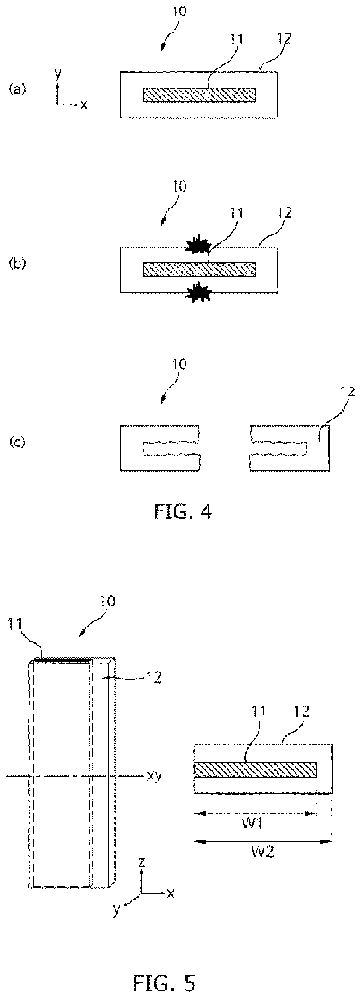

FIG. 4 illustrates a short-circuiting process of the electrode tab 10 in the secondary battery according to embodiments of the present disclosure.

Referring to parts (a) and (b) of FIG. 4, when a temperature of the electrode tab 10 rises to a temperature higher than the melting point of the first metal 11, the first metal 11 melts. For example, in a case where an event such as an external short circuit occurs in the secondary battery cell, high resistance and high heat may be generated locally in the secondary battery cell.

Referring to (c) of FIG. 4, the first metal 11, which has a lower melting point than the second metal 12, melts before the second metal 12. Thereafter, as the first metal 11 is melted, the second metal 12 may be short-circuited. Thus, the electrode tab 10 may be short-circuited. Here, the melted first metal 11 may be discharged to the outside of the electrode tab 10. In this manner, the secondary battery cell may be put into an insulating state, thereby minimizing damage to neighboring secondary battery cells.

As described above, according to embodiments of the present disclosure, the secondary battery may include an electrode tab 10 capable of short-circuiting. Thus, damage to the battery pack can be minimized before the secondary battery cell experiences internal degradation and before there is a rise in internal pressure.

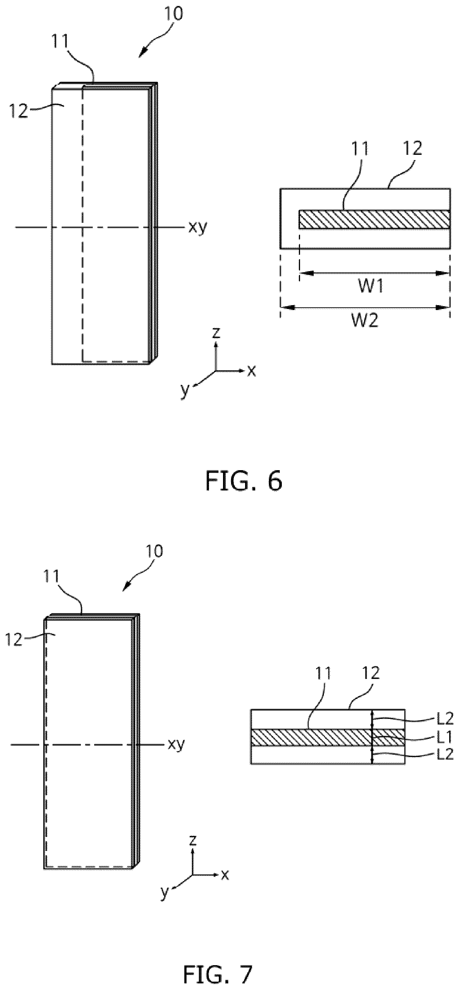

FIG. 5 and FIG. 6 each illustrates the electrode tab 10 of the secondary battery according to a second embodiment of the present disclosure. Hereinafter, for convenience, the following description will focus on the differences from the embodiment described in FIG. 2.

In an embodiment, at least one surface of the first metal 11 may be exposed to outside of the electrode tab 10. Referring to FIG. 5, the left side surface of the first metal 11 may be exposed to outside of the electrode tab 10 at the side surface of the electrode tab 10. By exposing the left side surface of the first metal 11 at the left side surface of the electrode tab 10, the second metal 12 may be easily short-circuited upon melting of the first metal 11.

Referring to FIG. 6, the right side surface of the first metal 11 may be exposed to outside of the electrode tab 10 at the side surface of the electrode tab 10. By exposing the right side surface of the first metal 11 at the right side surface of the electrode tab 10, the second metal 12 may be easily short-circuited upon melting of the first metal 11.

In an embodiment, the width W1 of the first metal 11 may be at least 75% of the total width W2 of the electrode tab 10. Thus, the first metal 11 may be made to have the width W1 that is sufficient to cause a short circuit in the electrode tab 10 when the first metal 11 melts due to degradation in the secondary battery.

As illustrated in FIGS. 5 and 6, when at least one surface of the first metal 11 is exposed to outside of the electrode tab 10, the melted first metal 11 may be effectively discharged to outside of the electrode tab 10.

FIG. 7 illustrates the electrode tab 10 of the secondary battery according to a third embodiment of the present disclosure. Hereinafter, for convenience, the following description will focus on the differences from the embodiment described in FIG. 2.

Referring to FIG. 7, at least a portion of the electrode tab 10 may include a first plate-shaped metal, a second plate-shaped metal, and a third plate-shaped metal. The first plate-shaped metal may be made of a first metal 11, and the second plate-shaped metal may be made of the second metal 12 and disposed on a surface of the first plate-shaped metal 11. In addition, the third plate-shaped metal may be made of the second metal 12 and disposed on a second surface that is opposite to the first surface of the first plate-shaped metal 11. Here, the side surfaces of the first plate-shaped metal 11 are exposed to outside of the electrode tab 10.

In an embodiment, the thickness L1 of the first metal 11 may be 30% or less of the total thickness of the electrode tab 10. In an embodiment, the thickness L1 of the first metal 11 and the thickness L2 of the second metal 12 disposed on the upper surface or the lower surface of first metal 11 may be in a 3:4 ratio. In another embodiment, the thickness L1 of the first metal 11 and the thickness L2 of the second metal 12 disposed on the upper surface or the lower surface of first metal 11 may be in a 2:5 ratio. The first metal 11 may be made to have the thickness L1 that is sufficient to cause a short circuit in the electrode tab 10 when the first metal 11 melts due to degradation in the secondary battery.

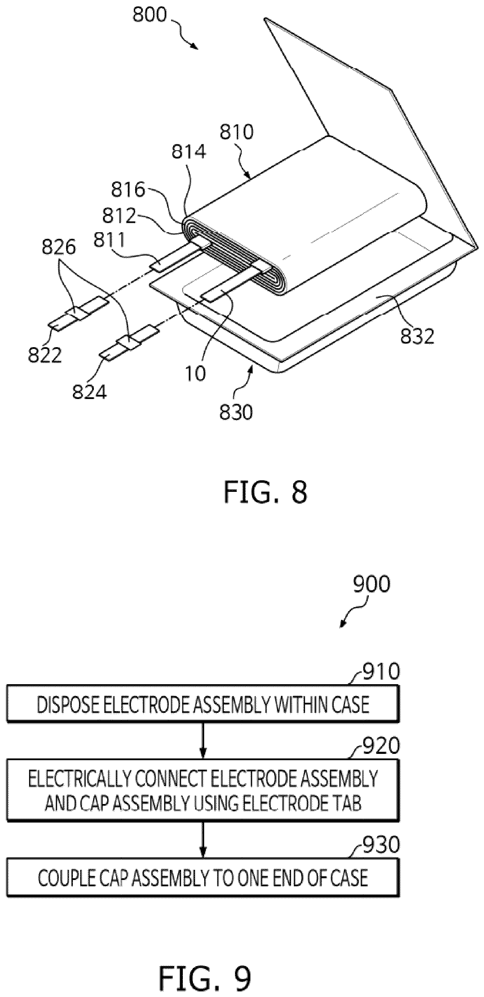

FIG. 8 illustrates a pouch-type secondary battery 800 according to embodiments of the present disclosure. Hereinafter, for convenience, the following description will focus on the differences from those of the embodiment described in FIGS. 1 and 2.

Referring to FIG. 8, the pouch-type secondary battery 800 includes an electrode assembly 810 and a pouch 830 accommodating the electrode assembly 810.

The electrode assembly 810 includes a negative electrode plate 812 as a first electrode plate, a positive electrode plate 814 as a second electrode plate, and a separator 816 interposed therebetween. Further, the electrode assembly 810 may further include a positive electrode tab 10 and a negative electrode tab 811. The negative electrode plate 812 may include the negative electrode tab 811 electrically connected to a negative electrode uncoated portion, and the positive electrode plate 814 may include the positive electrode tab 10 electrically connected to a positive electrode uncoated portion. The negative electrode tab 811 and the positive electrode tab 10 are respectively welded to a negative electrode lead 822 and a positive electrode lead 824 of an external terminal to be electrically connected to outside. A tab film 826 for insulation from the pouch 830 is attached to the negative electrode lead 822 and the positive electrode lead 824.

The separator (816) is made of a porous material and may be made of polyolefin such as polyethylene, polypropylene, or the like.

In a state in which the electrode assembly 810 is accommodated in the pouch 830, sealing parts 832 of edges of the pouch 830 come into contact with each other (e.g., the sealing parts 832 around the periphery of the bottom portion of the pouch 830 come into contact with a corresponding peripheral area of the top potion (e.g., a cover) of the pouch 830) to be sealed. The sealing is performed in a state in which the tab film 8266 is disposed between the sealing parts 832. As shown in FIG. 5, the form in which the tab film 826 is attached to each of the negative electrode tab 811 and the positive electrode tab 10 is defined as a "separable tab film" (e.g., this sealing structure is referred to as a separable sealing structure).

The electrode tab 10 according to some embodiments of the present disclosure may be electrically connected to the positive electrode plate 814 of the electrode assembly 120. That is, the electrode tab 10 may be the positive electrode tab.

In an embodiment, the electrode tab 10 may protrude to outside the pouch 830. The positive electrode tab, which is formed of a strip-shaped metal plate, may be manufactured by including a metal material having excellent conductivity, such as an aluminum (Al) plate. Accordingly, the first metal and the second metal may be plate-shaped. But the present disclosure not limited to such an embodiment.

In some embodiments of the present disclosure, the electrode tab 10 is provided to prevent damage to neighboring secondary battery cells before the temperature of the secondary battery cell reaches a high temperature. As described above in embodiments, the electrode tab 10 may include an alloy layer with a low melting point, which may induce an insulated state of the electrode tab 10 before the activation of the current interrupt device. Thus, the stability of the battery pack can be ensured before the secondary battery cell rises to a high temperature.

The electrode tab 10 may be used with not only to the cylindrical secondary battery 100 of FIG. 1 and the pouch-type secondary battery of FIG. 8, but also with a prismatic secondary battery and a coin-type secondary battery. For example, the electrode tab 10 according to embodiments of the present disclosure may be used for the positive electrode tab of the prismatic secondary battery and the positive electrode tab of the coin-type secondary battery.

FIG. 9 is a flowchart of a method S900 of manufacturing a secondary battery according to embodiments of the present disclosure, which may be a method of manufacturing the secondary battery 100 shown in FIG. 1.

Referring to FIG. 9, the method S900 may begin with disposing an electrode assembly including a positive electrode plate, a separator, and a negative electrode plate within a case (step S910).

The electrode assembly and a cap assembly may be electrically connected using the electrode tab (step S920). Here, the electrode tab may be connected to a positive electrode plate of the electrode assembly. That is, the electrode tab may be a positive electrode tab. The positive electrode tab, which is formed of a strip-shaped metal plate, may be manufactured by including a metal material having excellent conductivity, such as an aluminum (Al) plate. The electrode tab may include a first metal and a second metal surrounding at least a portion of the first metal, as described above.

The cap assembly may be coupled to one end of the case (step S930).

In an embodiment, a melting point of the second metal may be higher than a melting point of the first metal. For example, in a case where the second metal is aluminum, the melting point of the second metal may be 660 °C, and the melting point of the first metal may range from 50 °C to 280 °C. For example, the first metal may be an alloy including at least two of arsenic (As), lead (Pb), tin (Sn), cadmium (Cd), and indium (In). The second metal may be a metal including aluminum (Al). Accordingly, as a temperature of the secondary battery increases, the first metal melts before the second metal, which may cause a short circuit in the electrode tab. Thus, the secondary battery cell may reach an insulated state before the neighboring secondary battery cells are damaged.

As illustrated in FIG. 2, in an embodiment a length of the first metal may be equal to or less than a length of the second metal. Here, a length of the electrode tab may refer to a length extending in the Z-axis direction.

In an embodiment, the first metal may be located at the center of the electrode tab with all surfaces surrounded by the second metal. In another example, some surfaces of the first metal may be exposed to outside of the electrode tab.

In an embodiment, a thickness of the first metal may be 30% or less of the total thickness of the electrode tab. In an embodiment, the thickness of the first metal and a thickness of the second metal positioned on the upper surface or the lower surface of the first metal may be in a 3:4 ratio. In another embodiment, the thickness of the first metal and the thickness of the second metal positioned on the upper surface or the lower surface of the first metal may be in a 2:5 ratio. The first metal may be made to have the thickness that is sufficient to cause a short circuit in the electrode tab when the first metal melts due to degradation in the secondary battery.

In an embodiment, a width of the first metal may be at least 75% of a width of the electrode tab relative to the center C of the electrode tab. Here, the widths of the first metal and the second metal may be the lengths extending in the x-axis direction on the x-y cross-section of the electrode tab. The first metal may be made to have the width that is sufficient to cause a short circuit in the electrode tab when the first metal melts due to degradation in the secondary battery.

In one embodiment, when a temperature of the electrode tab rises to a temperature higher than the melting point of the first metal, the first metal may melt. For example, when an event such as an external short circuit occurs in the secondary battery cell, high resistance and high heat may be generated locally in the secondary battery cell.

Because the first metal has a lower melting point than the second metal, the first metal may melt before the second metal. Thereafter, as the first metal is melted, the second metal may be short-circuited. That is, the electrode tab may be short-circuited. The melted first metal may be discharged to outside of the electrode tab. In this manner, the secondary battery cell may be guided into an insulating state, thereby minimizing damage to neighboring secondary battery cells.

As described above, according to some embodiments of the present disclosure, the secondary battery may include an electrode tab capable of short-circuiting such that damage to the battery pack can be minimized before the secondary battery cell experiences internal degradation and an arise in internal pressure.

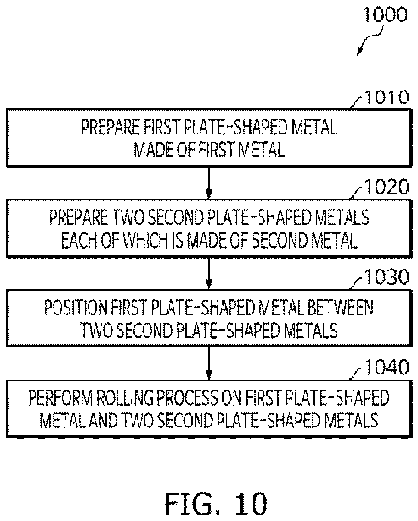

FIG. 10 is a flowchart of a method S1000 of manufacturing an electrode tab according to some embodiments of the present disclosure.

Referring to FIG. 10, the method S1000 may begin with preparing a first plate-shaped metal made of a first metal (step S1010). Simultaneously, two second plate-shaped metals each of which is made of a second metal may be prepared (step S1020).

Subsequently, the first plate-shaped metal may be positioned between the two second plate-shaped metals (step S1030).

Thereafter, a rolling process may be performed on the first plate-shaped metal and the two second plate-shaped metals (step S1040). During the rolling process, the thickness of the second metal positioned on the upper surface of the first metal and the thickness of the second metal positioned on the lower surface of the first metal may be the same.

Although the present disclosure has been described above with respect to embodiments thereof, the present disclosure is not limited thereto. Various modifications and variations can be made thereto by those skilled in the art within the scope of the present disclosure.

**DESCRIPTION OF SOME REFERENCE SYMBOLS**

| | | | |
|---|---|---|---|
| 10: | electrode tab | | |
| 11: | first metal | 12: | second metal |
| 30: | rolling device | | |
| 100: | cylindrical secondary battery | | |
| 110: | case | | |
| 111: | bottom part | 112: | sidewall |
| 120: | electrode assembly | | |
| 121: | negative electrode plate | 122: | positive electrode plate |
| 123: | separator | 124: | negative electrode tab |
| 126: | first insulation plate | 127: | second insulation plate |
| 130: | center pin | | |
| 140: | cap assembly | | |
| 141: | top plate | 142: | middle plate |
| 143: | insulation plate | 144: | bottom plate |
| 800: | pouch-type secondary battery | | |
| 810: | electrode assembly | | |
| 811: | negative electrode tab | 812: | negative electrode plate |
| 814: | positive electrode plate | 816: | separator |
| 822: | negative electrode lead | 824: | positive electrode lead |
| 826: | tab film | | |
| 830: | pouch | | |
| 832: | sealing parts | | |

## Claims

1. An electrode assembly (120, 810) comprising:
a positive electrode plate (122, 814);
a negative electrode plate (124, 812);
a separator (123, 816) positioned between the positive electrode plate (122, 814) and the negative electrode plate (124, 812); and
an electrode tab (10) electrically connected to the positive electrode plate (122, 814),
wherein the electrode tab (10) comprises a first metal (11) and a second metal (12) that at least partially surrounds the first metal (11).

2. The electrode assembly (120, 810) as claimed in claim 1, wherein a melting point of the second metal (12) is higher than a melting point of the first metal (11).

3. The electrode assembly (120, 810) as claimed in claim 1 or 2, wherein the first metal (11) is located at a center of the electrode tab (10) with all of its surfaces surrounded by the second metal (12).

4. The electrode assembly (120, 810) as claimed in claims 1 to 3, wherein at least one surface of the first metal (11) is exposed to outside of the electrode tab (10).

5. The electrode assembly (120, 810) as claimed in claims 1 to 4, wherein the electrode tab (10) comprises:
a first plate-shaped metal made of the first metal (11);
a second plate-shaped metal made of the second metal (12) and disposed on a first surface of the first plate-shaped metal; and
a third plate-shaped metal made of the second metal (12) and disposed on a second surface opposite to the first surface of the first plate-shaped metal, and
wherein a pair of side surfaces of the first plate-shaped metal are exposed to outside of the electrode tab (10).

6. The electrode assembly (120, 810) as claimed in claims 1 to 5, wherein a thickness of the first metal (11) is 30% or less of a thickness of the electrode tab (10).

7. The electrode assembly (120, 810) as claimed in claims 1 to 6, wherein a width of the first metal (11) is at least 75% of a width of the electrode tab (10).

8. The electrode assembly (120, 810) as claimed in claims 1 to 7, wherein the electrode tab (10) is configured such that, when a temperature thereof rises to a temperature higher than a melting point of the first metal (11), first metal (11) melts and then the second metal (12) is short-circuited.

9. The electrode assembly (120, 810) as claimed in claim 8, wherein the electrode tab (10) is configured such that the melted first metal (11) is discharged to outside of the electrode tab (10), thus putting the secondary battery cell realized by the electrode assembly into an insulating state, thereby minimizing damage to neighboring electrode assemblies.

10. A method of manufacturing a secondary battery (100), the method comprising:
disposing an electrode assembly (120, 810) within a case (110);
connecting an electrode tab (10) of the electrode assembly (120, 810) and a cap assembly (140); and
coupling the cap assembly (140) to an end of the case (110),
wherein the electrode tab comprises a first metal (11) and a second metal (12) that at least partially surrounds the first metal (11).

11. The method as claimed in claim 10, wherein the electrode tab (10) is made by:
preparing a first plate-shaped metal made of the first metal (11);
preparing two second plate-shaped metals each of which is made of the second metal (12);
positioning the first plate-shaped metal between the two second plate-shaped metals; and
performing a rolling process on the first plate-shaped metal and the two second plate-shaped metals.

12. The method as claimed in claim 10 or 11, wherein a melting point of the second metal (12) is higher than a melting point of the first metal (11).

13. The method as claimed in claims 10 to 12, wherein the first metal (11) is located at a center of the electrode tab (10) with all of its surfaces surrounded by the second metal (12).

14. The method as claimed in claims 10 to 13, wherein at least one surface of the first metal (11) is exposed to outside of the electrode tab (10).

15. The method as claimed in claims 11 to 14, wherein the performing of the rolling process comprises: controlling a thickness of the second metal (12) positioned on an upper surface of the first metal (11) and a thickness of the second metal (12) positioned on a lower surface of the first metal (11) to be the same.
